Europäisches Patentamt

European Patent Office

Office européen des brevets

(11) Publication number: **0 316 482 B1**

# EUROPEAN PATENT SPECIFICATION

(45) Date of publication of patent specification: **30.10.91** (51) Int. Cl.⁵: **F16H 7/00, F16H 35/02**

(21) Application number: **87202283.5**

(22) Date of filing: **20.11.87**

(54) **Flexible-link loop transmission with belt and pulleys, with variable mutual angular position of the pulleys.**

(43) Date of publication of application:
**24.05.89 Bulletin 89/21**

(45) Publication of the grant of the patent:
**30.10.91 Bulletin 91/44**

(84) Designated Contracting States:
**AT BE CH DE ES FR GB GR IT LI NL SE**

(56) References cited:
**BE-A- 825 427**
**FR-A- 1 507 783**
**US-A- 2 352 797**
**US-A- 3 465 599**

(73) Proprietor: **Pacini, Ermanno**
**Viale Boezio, 10**
**I-20145 Milano(IT)**

Proprietor: **De Lorenzo Buratta, Emilio**
**Via San Martino, 8**
**I-35010 Vigodarzere Padova(IT)**

(72) Inventor: **Pacini, Ermanno**
**Viale Boezio 10**
**I-20145 Milano(IT)**

(74) Representative: **Mittler, Enrico et al**
**c/o Marchi & Mittler s.r.l. Viale Lombardia, 20**
**I-20131 Milano(IT)**

## Description

The present invention relates to a flexible-link loop transmission, in particular with belt and pulleys, with variable mutual angular position of the pulleys.

BE-A-825427, US-A-3465599, FR-A-1507783 and US-A-2352797 disclose known flexible-link loop transmissions with belt and pulleys. US-A-2352797 discloses the features defined in the first part of the sole claim.

The object of the present invention is to widen the field of application of such flexible-link loop transmissions with belt and pulleys, so as to add to the well known features of low cost, low weight, small space occupied, long life and quietness the advantages of accurate variability of the angular position of the pulleys, extension of the link to other pulleys, and easy and rapid raplacement of the belt.

In view of said object the invention provides a transmission comprising a flexible belt stretched between two end pulleys and at least two adjusting pulleys located in an intermediate position between the two end pulleys of the transmission as defined in the sole claim.

In this manner the other face of said end pulley can be used for a similar engagement with an end pulley of another coplanar transmission so as to accomplish a series of interconnected transmissions.

In accordance with the invention the transmission with the endless belt looped over the fixed idling pulleys and moving adjusting pulleys so as to load said adjusting pulleys with forces supported by projecting shafts is arranged such that easy and rapid replacement of the belt is thus possible.

For better understanding of the invention reference will now be made to the drawings wherein:

FIG. 1 shows a diagram of the principle of a transmission in accordance with the invention,

FIG. 2 shows a diagram of a possible application of the present invention,

FIG. 3 shows the principle of the transmission in accordance with the invention in an application in accordance with FIG. 2.

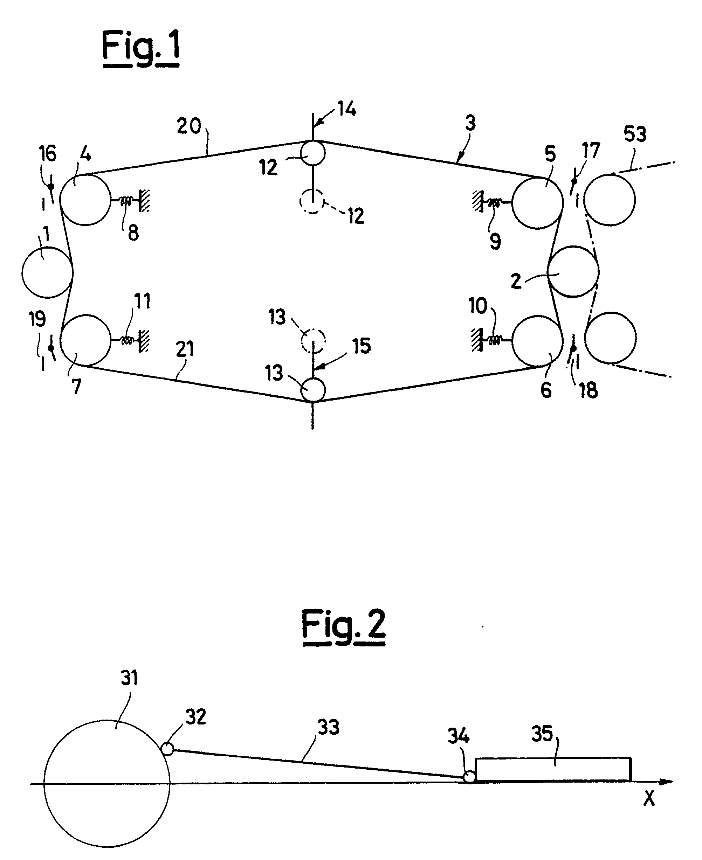

The transmission illustrated in FIG. 1 comprises two toothed pulleys 1 and 2, one toothed belt 3, four idling pulleys 4, 5, 6 and 7 stressed by respective springs 8, 9, 10 and 11 and two adjusting pulleys 12 and 13 moving along respective aligned guides 14 and 15 perpendicular to the conjugate of the axes of rotation of the pulleys 1 and 2 in the middle of said conjugate.

The four idling pulleys 4, 5, 6 and 7 which are essentialy fixed even though stressed by their respective springs 8, 9, 10 and 11 are placed two by two (in pairs) at the sides of the pulleys 1 and 2 in such a manner as to deflect the belt 3 toward engagement with the inner face of the respective pulley. In this manner the other face of the same pulley can be used for a similar engagement with a belt 53 of a similar coplanar transmission as shown in dot and dash lines in FIG. 1 in order to accomplish a series of interconnected transmissions.

Respective electrical contacts 16, 17, 18 and 19 work with the idling pulleys 4, 5, 6 and 7 and with a drive motor of the transmission in such a manner as to stop said motor in case of variation of the position of the idling pulleys following stretching or breakage of the chain.

If desired it can be made possible to move the pulleys 4-7 in the opposite direction in order to disengage the belt 3 from the pulleys 1 and 2 and thus break the connection between the pulleys. This could be useful for example if the pulleys 1 and 2 were connected to front and rear wheels of a 4-wheel drive vehicle.

As shown in FIG. 1 the two adjusting pulleys 12 and 13 are normally moved outward in relation to the conjugates of the axes of rotation of the pulleys 4-5 and 6-7 respectively. Moving them along the guides 14 and 15 and hence transversely to the two opposed branches 20 and 21 of the belt 3 allows modification of the movement of said branches and consequently, as will be seen below, the mutual angular position of the two pulleys 1 and 2.

At their inner end the respective guides are found with their axes coinciding with the conjugates of the axes of rotation of the pulleys 4-5 and 6-7 as shown in dot and dash lines in FIG. 1. In said position they allow replacement of the belt 3 utilizing the fact that the pulleys 4-7 and 12-13 are all inside the belt and thus do not form an obstacle and the supported forces are such as to allow a cantilevered arrangement of the respective axes of rotation.

To understand how moving the adjusting pulleys 12 and 13 along their respective guides 14 and 15 allows changing the mutual angular position of the two pulleys 1 and 2 in the situation shown in FIG. 1 let us call $l_{12}$ the length of the upper branch 20 of the belt 3 controlled by the adjusting pulley 12, $l_{13}$ the length of the lower branch 21 controlled by the adjusting pulley 13, $y_{12}$ the distance of the axis of rotation of the adjusting pulley 12 from the inner end of the respective guide 14 coinciding with the conjugate of the axes of rotation of the pulleys 4 and 5, $y_{13}$ the distance of the axis of rotation of the adjustment pulley 13 from the inner end of the respective guide 15, d the distance, equal for all the pulleys 4-7, between the axis of rotation of the pulley and the respective guide 14 or 15, l the length of the section of belt between the pulleys 4 and 7 which is equal to that between the pulleys 5 and 6, and L the total length of the belt 3.

In the same manner but with the addition of an apex are indicated the same values in case of movement of the adjusting pulleys 12 and 13 from the position shown in FIG. 1.

Let $\gamma$ be the variation in the mutual angular position of the two pulleys 1 and 2 (e.g. of the pulley 2 in relation to the pulley 1), $\Delta l$ the corresponding movement of the belt 3 along the arc of contact with the pulley in movement, and D the diameter of the pulley.

It appears evident that movement of the adjusting pulleys 12 and 13 from the position of FIG. 1, in concordant direction and to an extent such as to not alter the tension of the belt, does not change the total length (L) of the belt nor that (l) of the two sections of belt included between the pulleys 4, 7 and 5, 6.

Thus the following equality prevails:

$$L = l_{12} + l_{13} + 2l = L'_{12} + L'_{13} + 2l$$

with the result:

$$l_{12} + l_{13} = l'_{12} + l'_{13}$$

where

$$l_{12} = \frac{1}{2}\sqrt{d^2 + y_{12}^2} \qquad l_{13} = \frac{1}{2}\sqrt{d^2 + y_{13}^2}$$

$$l'_{12} = \frac{1}{2}\sqrt{d^2 + y'^2_{12}} \qquad l'_{13} = \frac{1}{2}\sqrt{d^2 + y'^2_{13}}$$

i.e. the lengths l of the branches 20 and 21 of the belt 3 depend on the distances $\underline{y}$ and hence on the position of the adjusting pulleys.

Variation in the length of one of the two branches 20 and 21 compensated for by the equal not contrary variation of the length of the other branch is equal to the movement $\Delta l$ along the arc of contact of the belt 3 with the pulley in movement to transfer the length of belt subtracted from one branch to the other. We thus have:

$$l_{12} - l'_{12} = l'_{13} - l'_{12} = \Delta l$$

where

$$\Delta l = \frac{\gamma\, D\, \pi}{360°}$$

with the result that

$$\gamma = \frac{\Delta l\ 360°}{D\ \pi}$$

i.e. $\gamma$ depends on the position of the adjusting pulleys 12 and 13 and can be varied by appropriately adjusting said pulleys.

The possible applications of the transmission represented in FIG. 1 and in general in accordance with the present invention are multiple. Merely as an example there is considered here that of diamond-studded frames which as is known provide for the blade board a drive mechanism such as that represented in FIG. 2, i.e. comprising a flywheel 31, a pin 32, a connecting rod 33 and a connecting rod small end 34 connected to the blade board 35 running in the direction of the axis X.

It is known that for a given material to be sawed the hourly production of diamond-studded frames with straight-line reciprocating harmonic motion is directly proportional to the length of the stroke and the number of revolutions of the flywheel.

The force of inertia also depends however on the number of revolutions of the flywheel or, more precisely, it is proportional to the square thereof so that increasing the number of revolutions means not only increasing hourly production but even more the force of inertia with the resulting negative effects.

Increasing the stroke means increasing the length of the blades and their cost, the weight of the blade board and the possibility of deflection from the correct working trajectory.

For this reason some modern frames are equipped with two flywheels with relative connecting rods and cranks, i.e. with two mechanisms such as those shown in FIG. 2 in such a manner as to divide by two the force of inertia and thus increase the number of revolutions and hence hourly production.

This solution however involves the risk of angular phase displacement between the two flywheels. If one of the two flywheels is out of phase in advance of the other all the force of inertia of the blade board at top dead center increased by compression of the connecting rod of the other fhywheel which has not yet completed its stroke is discharged on the connecting rod of the flywheel in advance, exerting thereon a tractive force not foreseen in the design and hence dangerous. The same reasoning can be applied to lower dead center where the connecting rod of the flywheel in advance must support an undesired compression overload.

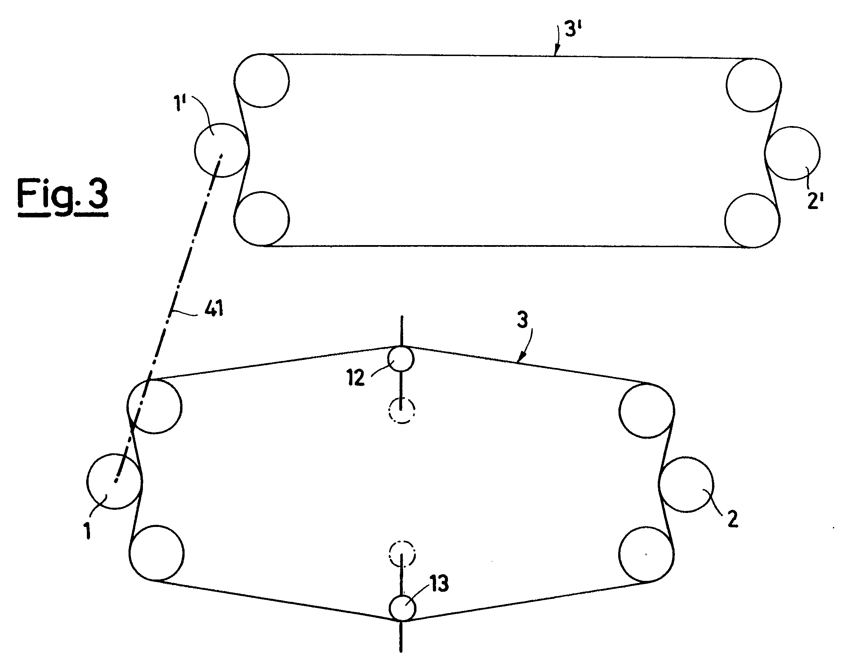

To solve this drawback it is necessary to cancel out the dephasing between the two flywheels and for this purpose the transmission in accordance with the invention can be used. More specifically a transmission such as that shown in FIG. 1 is to be associated with each flywheel and the two transmissions are to be coupled in the manner shown in FIG. 3, i.e. with the pulleys 1-1' of the two transmissions mounted on a single driving axle 41 and the pulleys 2-2' mounted on separate driving axles of the respective flywheels. Reference numbers 3-3' in FIG. 3 indicate the belts of the two transmissions.

To measure the degree of dephasing between the two flywheels the driving axle 41 is stopped momentarily when the connecting rod small end associated with the pulley 2' is at top dead center and in this position a comparator is set on the connecting rod small end driven by the pulley 2.

The driving axle 41 is then released and the two flywheels are allowed to rotate in such a manner as to permit measurement with a comparator of the angular distance between the two flywheels at top dead center.

Correction is subsequently made by again stopping the driving axle and moving the adjusting pulleys 12 and 13 to obtain complete timing of the pulley 2 in relation to the pulley 2' and hence of the two driven flywheels respectively.

It is clear that in this case the transmission including the pulleys 1' and 2' do not require movable adjusting pulleys.

## Claims

1. Flexible-link loop transmission, comprising a flexible endless belt (3) stretched between two end pulleys, fixed idling pulleys and at least two adjusting pulleys (12 and 13) located in an intermediate position between the two end pulleys (1 and 2), one adjusting pulley (12) acting on one branch (20) and the other adjusting pulley (13) on the opposite branch (21) of the connecting belt and moving transversally to the respective branches (20, 21) of the belt to vary correspondingly the mutual angular position, wherein said belt (3) is looped over said fixed idling pulleys (4, 5, 6, 7) and over two of the remaining pulleys, characterized in that said idling pulleys are arranged in pairs at the sides of each pulley (1 and 2) whereby each pair of fixed idling pulleys (4, 7 and 5, 6) deflects the associated belt section toward engagement with the respective end pulleys (1,2) being located outside said flexible endless belt (3).

## Revendications

1. Transmission à boucle de lien flexible, comprenant une courroie sans fin flexible (3) tendue entre deux poulies d'extrémité, des poulies folles fixes et au moins deux poulies de réglage (12 et 13) placées dans une position intermédiaire entre les deux poulies d'extrémité (1 et 2), une poulie de réglage (12) agissant sur un brin (20) et l'autre poulie de réglage (13) sur le brin opposé (21) de la courroie de transmission, et se déplaçant transversalement aux brins respectifs (20, 21) de la courroie pour modifier dans une mesure correspondante les positions angulaires relatives, transmission dans laquelle ladite courroie (3) est enroulée en boucle autour desdites poulies folles fixes (4, 5, 6, 7) et de deux des poulies restantes, caractérisée en ce que lesdites poulies folles sont disposées par paires, des deux côtés de chaque poulie (1 et 2), de sorte que chaque paire de poulies folles fixes (4, 7 et 5, 6) renvoie la section de courroie correspondante pour la mettre en prise avec les poulies d'extrémité respectives (1, 2) qui sont situées en dehors de ladite courroie sans fin flexible (3).

**Patentansprüche**

1. Zugmittelgetriebe, umfassend einen flexiblen endlosen Riemen (3), der zwischen zwei Endrollen, feststehenden Leerlaufrollen und mindestens zwei Einstellrollen (12 und 13) gespannt ist, wobei die Einstellrollen in einer Zwischenstellung zwischen den zwei Endrollen (1 und 2) angeordnet sind, wobei eine Einstellrolle (12) an einem Abschnitt (20) und die andere Einstellrolle (13) an dem gegenüberliegenden Abschnitt (21) des Verbindungsriemens wirkt und sich rechtwinklig zu den jeweiligen Abschnitten (20, 21) des Riemens bewegt, um entsprechend die wechselseitigen Winkelpositionen zu variieren, wobei der Riemen (3) um die feststehenden Leerlaufrollen (4, 5, 6, 7) und über zwei verbleibende Rollen geführt ist,
dadurch **gekennzeichnet,** daß die Leerlaufrollen in Paaren an den Seiten jeder Rolle (1 und 2) angeordnet sind, wodurch jedes Paar feststehender Leerlaufrollen (4, 7 und 5, 6) den zugeordneten Riemenabschnitt in Richtung eines Eingriffs mit den jeweiligen Endrollen (1, 2) ablenkt, die außerhalb des flexiblen endlosen Riemens (3) angeordnet sind.

## Fig.1

## Fig.2

Fig.3

EP 0 316 482 B1